# EUROPÄISCHE PATENTSCHRIFT

(11) **EP 3 906 777 B1**
(45) Veröffentlichungstag und Bekanntmachung des Hinweises auf die Patenterteilung: **10.12.2025**
(21) Anmeldenummer: 20172793.0
(22) Anmeldetag: 04.05.2020
(51) Int. Cl.: A01G 9/14, A01G 9/24, A01G 31/06, B65G 1/04

(54) **GEWÄCHSHAUSANORDNUNG**
GREENHOUSE ARRANGEMENT
AGENCEMENT DE SERRE

(43) Veröffentlichungstag der Anmeldung: 10.11.2021
(73) Patentinhaber: Jungheinrich Aktiengesellschaft, 22047 Hamburg (DE)
(72) Erfinder: Rollwa, Volker, 66953 Pirmasens (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(56) Entgegenhaltungen:
- WO-A1-2018/122289
- CN-U- 201 733 693
- FR-A- 1 103 096
- NL-A- 9 300 418
- US-A- 3 314 192
- US-A1- 2012 060 416
- US-A1- 2019 246 571
- US-A1- 2019 380 283

## Beschreibung

Die Erfindung betrifft eine Gewächshausanordnung.

Bekannte Gewächshausanordnungen weisen beispielsweise eine Folienstruktur auf, die über einen Pflanzbereich angeordnet ist. Damit alle Pflanzen gleichmä-βig beleuchtet werden, werden Gewächshausanordnungen im Allgemeinen über Feldern angeordnet. Alternativ zu der Folienstruktur finden auch Glasstrukturen Anwendung. In jedem Fall müssen die Sonnenstrahlen zu den Pflanzen durchdringen, wodurch eine gewisse Transparenz der Planenstruktur bzw. der Glasstruktur vorausgesetzt wird. Alternativ zu den oben genannten Feldern kann die Gewächshausanordnung auch Pflanztische überspannen. Damit die Pflanzen zu pflegen, zu bewässern und zu ernten sind, werden innerhalb der Gewächshausanordnungen Wege angelegt, auf denen keine oder nur zum Teil Pflanzen wachsen. Daher ist der Grundriss solcher Gewächshausanordnungen in der Regel sehr großzügig bemessen.

Eine weitere Gewächshausordnung ist das so genannte "Vertical Farming". Dabei werden Pflanzen in Regalen, die in Hallen angeordnet sind, gezüchtet. Durch die Regalanordnung entstehen mehrere Ebenen, auf welchen Pflanzen wachsen. Ähnlich zur oben beschriebenen Gewächshausanordnung müssen im "Vertical Farming" zwischen den Regalen Wege zur Pflege, Bewässerung und Ernte vorgesehen werden. Daraus ergibt sich ein gewisser Abstand zwischen den einzelnen Regalen, der nicht unterschritten werden darf um ausreichend viel Bewegungsfreiheit für Pflege, Ernte, Bewässerung oder dergleichen zu haben. Auf einem gleich großen Grundriss, wie bei den Feldern oben beschrieben, kann somit ein größerer Pflanzbereich Platz finden.

US 2019/246571 A1 beschreibt eine Regalanordnung mit Blocklagerelemntaufnahmeräumen, in die Behälter von oben eingelagert werden können. Mehrere Behälter bilden in einen Blocklagerelementaufnahmeraum einen Behälterstapel. Die Behälter weisen einen Deckel und Verbindungselemente auf, mit welchen eine Informationsverbindung zwischen zwei oder mehreren Behältern eines Behälterstapels hergestellt werden kann. Die Behälter können an ihrer Unterseite oder an der nach Innen gerichteten Seite des Deckels Leuchtelemente aufweisen. Weiterhin können die Behälter eine Energieversorgungseinheit aufweisen, um beispielsweise die Leuchtelemente mit Strom zu versorgen. Dabei wird Energie bzw. Informationen von einem Behälter zu einem benachbarten Behälter des Behälterstapels weitergegeben.

US 2012/0060416 A1 beschreibt ein Verfahren und eine Vorrichtung, um Pflanzen in vertikalen Stapeln wachsen zu lassen. Dazu umfasst die Vorrichtung Pflanzbehälter und Leuchtanordnungen die in vertikaler Richtung abwechselnd angeordnet sind. Dabei sind die Pflanzbehälter an Ketten hängend angeordnet. Die Leuchtanordnungen hängen wiederum an den Pflanzbehältern. Die Pflanzbehälter werden durch Wasserleitungen bewässert, wobei die Wasserleitungen durch Magnetventile gesteuert werden, die durch Kabel mit einer Energieeinheit verbunden sind.

NL 9 300 418 A beschreibt ein Fahrzeug, das dazu geeignet ist, Pflanzbehälter einer Säulenanordnung zuzuführen und dieser wieder zu entnehmen. Das Fahrzeug weist einen Scherenhubmechanismus auf, mit dem der Pflanzbehälter angehoben und abgesenkt werden kann. Jede Säule der Säulenanordnung weist Halteelemente auf, die in einer Halteposition oder einer Freigabeposition angeordnet werden können. Das Fahrzeug kann die Halteelemente durch einen Mechanismus von der Halteposition in die Freigabeposition und umgekehrt überführen.

WO 2018/122289 A1 beschreibt ein Lagerbediengerät zum Einlagern und Auslagern von Ware in ein Hochregallager. Das Lagerbediengerät weist mehrere Rollen auf, auf welchen das Lagerbediengerät verfahrbar ist. Das Lagerbediengerät überführt Behälter von unten in einen Schacht. Befinden sich mehrere Behälter in diesem Schacht bilden die Behälter einen Behälterstapel. Der Behälterstapel 200 wird durch Haltevorrichtungen gehalten. Der Schacht wird durch Rahmenelemente seitlich begrenzt.

US 2019/380283 A1 beschreibt eine Gewächshausvorrichtung und -verfahren. Dazu werden Pflanzbehälter auf Regalböden durch eine Maschine angeordnet. Die Maschine kann sich dabei entlang einer Gasse bewegen, wobei auf jeder Seite der Gasse Regale angeordnet sind.

US 3 314 192 A beschreibt ein Regal, bei dem die Regalböden als Pflanzbehälter fungieren und an ihrer Unterseite Lichtquellen aufweisen. Die Leuchteinrichtung ist durch ein Stromkabel mit einem Stecker an ein Stromnetz angeschlossen, wobei ein Timer zwischen das Stromkabel und den Leuchteinrichtungen vorgesehen werden kann.

CN 201 733 693 U beschreibt eine Rahmenkonstruktion bestehend aus zwei H-förmigen Körpern, die mit einem Verbindungselement verbunden werden, in der ein Pflanzbehälter vorgesehen ist. In den Verbindungselement können Leuchtmittel angeordnet sein. Die Rahmenkonstruktion kann gestapelt werden, sodass mehrere Pflanzbehälter übereinander beabstanded vorgesehen sind.

FR 1 103 096 A beschreibt ein Wachstumskonzept, bei dem ein Pflanzbehälter viergeteilt ist. In regelmäßigen zeitlichen Abständen werden die Verhältnisse in den jeweiligen Vierteln angepasst, sodass bei jeder Anpassung die Pflanzen eines Viertels erntereif sind und geerntet werden. In diesem Viertel können erneut Stecklinge oder Samen ausgebracht werden, und der Vorgang beginnt von vorne. Die Pflanzbehälter sind stapelbar.

Es ist die Aufgabe der vorliegenden Erfindung bei einer Gewächshausanordnung den zur Verfügung stehenden Raum gut auszunutzen.

Diese Aufgabe wird durch die Merkmale des Anspruchs 1 gelöst.

Die Gewächshausanordnung weist ein Blocklager auf, in dem wenigstens ein Stapel aus mehreren Blocklagerelementen aufnehmbar ist. Ein Blocklager zeichnet sich dadurch aus, dass es eine sehr hohe Packungsdichte aufweist. Das Blocklager kann je nach Ausführungsform entweder von oben oder von unten mit stapelbaren Blocklagerelementen bestückt werden. In den Blocklagerelementen können Pflanzen in sämtlichen Wachstumsstadien angeordnet sein. Dadurch, dass die Blocklagerelemente stapelbar sind kann in einem solchen Blocklager eine sehr hohe Raumausbeute erzielt werden. Weiterhin kann das Blocklager gegenüber Umwelteinflüssen abgeschirmt sein, sodass für Pflanzen optimale Wachstumsbedingungen hergestellt werden können. Die so gestaltete Gewächshausanordnung ist dadurch kompakt gestaltet.

Vorzugsweise weist die Gewächshausanordnung wenigstens einen Blocklagerelementaufnahmeraum auf, der wenigstens eine Versorgungseinrichtung und/oder wenigstens eine Datenübertragungsvorrichtung aufweist. Durch die Versorgungseinrichtung können die Pflanzen bedarfsgerecht mit Licht, Flüssigkeit, Nährstofflösungen, einer entsprechenden Atmosphäre oder dergleichen entsprechend ihres Bedarfs versorgt werden. Durch die Datenübertragungsvorrichtung können beispielsweise Daten von Sensoren, Ventilen, Schaltern oder dergleichen übertragen werden. Die Daten können dabei helfen durch die Versorgungseinrichtung das Pflanzenwachstum zu optimieren.

Vorzugsweise ist unterhalb des Blocklagerelementaufnahmeraums ein Beschickungsraum angeordnet. Durch diese Anordnung kann der Blocklagerelementaufnahmeraum von unten beschickt werden, wodurch der Stapel aus Blocklagerelementen durch jedes neue Blocklagerelement von unten nach oben wächst. Weiterhin wird durch den Beschickungsraum der Stapel wieder abgebaut, d. h. jeweils ein unterstes Blocklagerelement wird nach unten hin entnommen. Die Schwerkraft bewegt die Blocklagerelemente, aus denen ein Stapel gebildet ist nach unten. Wenn nur ein Blocklagerelement in dem Blocklagerelementaufnahmeraum angeordnet ist befindet sich dieses Blocklagerelement in einer untersten Position des Blocklagerelementaufnahmeraums. Durch diese Anordnung werden Leerfahrten vermieden, da solange ein Blocklagerelement in einem Blocklagerelementaufnahmeraum angeordnet ist, sich ein Blocklagerelement in einer Entnahmeposition benachbart zum Beschickungsraum befindet.

Vorzugsweise weist das Blocklagerelement eine Leuchteinrichtung auf. Die Leuchteinrichtung kann auf einer Unterseite des Blocklagerelements angeordnet sein, sodass die Leuchteinrichtung in eine Schwerkraftrichtung leuchtet und/oder strahlt. Die Leuchteinrichtung kann neben einer Beleuchtungsaufgabe auch Erwärmungsaufgaben übernehmen, dass beispielsweise ein Lagergut, wie beispielsweise Pflanzen oder lichtsensitive Objekte, das in einem unterhalb des Blocklagerelement angeordnetes Blocklagerelement angeordnet ist, beleuchtet und/oder erwärmt werden kann.

Die Versorgungseinrichtung und/oder Datenübertragungsvorrichtung ist entlang einer Ein- und/oder Entnahmerichtung angeordnet. Dadurch können beispielsweise Blocklagerelemente mit verschiedenen Höhen in den Blocklagerelementaufnahmeraum angeordnet sein, ohne dass eine Versorgungslücke oder Daten-übertragungslücke entsteht.

Vorzugsweise weist der Blocklagerelementaufnahmeraum eine unterste Blocklagerelementaufnahmeposition und wenigstens eine in Schwerkraftrichtung weiter oben angeordnete Blocklagerelementaufnahmeposition auf, wobei die Versorgungseinrichtung und/oder Datenübertragungsvorrichtung ausgehend von einer obersten Blocklagerelementaufnahmeposition oberhalb der untersten Blocklagerelementaufnahmeposition endet. Entsprechend wird das Blocklagerelement, das in einer untersten Blocklagerelementaufnahmeposition angeordnet ist nicht mit Energie versorgt. Dies ist auch nicht notwendig, wenn die Leuchteinrichtung an der Unterseite des Blocklagerelementes angeordnet sein kann, wodurch die Leuchteinrichtung nach unten, in Schwerkraftrichtung, leuchtet. Da unterhalb des untersten Blocklagerelementes kein weiteres Blocklagerelement angeordnet ist, entfällt die Versorgung des untersten Blocklagerelements und dessen Leuchteinrichtung. Somit wird durch diese Anordnung sichergestellt, dass nur die Blocklagerelemente, die oberhalb des untersten Blocklagerelement angeordnet sind, mit Energie versorgt werden. Dadurch wird der Steueraufwand des Blocklagerelementes in der untersten Blocklagerelementaufnahmeposition vermieden. Weiterhin wird durch diese Anordnung der Material- und Montageaufwand reduziert, wodurch geringe Kosten anfallen.

Vorzugsweise sind unterschiedliche Versorgungseinrichtungen und/oder Datenübertragungsvorrichtungen an verschiedenen Ecken des Blocklagerelementaufnahmeraums angeordnet. Dadurch können Störungen zwischen der Datenübertragungsvorrichtung und der Energieübertragungsvorrichtung vermieden werden. Weiterhin können durch diese Anordnung verschiedene Sicherheitsaspekte eingehalten werden.

Die Versorgungseinrichtung weist eine Energieübertragungsvorrichtung auf. Damit Pflanzen, die in Blocklagerelementen angeordnet sind, beispielsweise beleuchtet werden können ist es von Vorteil, wenn eine Leuchteinrichtung mit Energie versorgt wird. Neben der Leuchteinrichtung kann die Energievorrichtung mit weiteren Energieverbraucher, wie beispielsweise Sensoren, verbunden sein.

Vorzugsweise weist wenigstens ein in dem Blocklagerelementaufnahmeraum angeordnetes Blocklagerelement wenigstens ein Gegenstück zur Energieübertragungsvorrichtung und/oder Datenübertragungsvorrichtung auf. Durch diese Vorrichtung kann Energie von dem Blocklagerelementaufnahmeraum zu dem Blocklager übertragen werden um Energieverbraucher zu versorgen. Mögliche Energieverbraucher sind beispielsweise Sensoren, Leuchteinrichtungen, Steuerungsanordnungen oder dergleichen.

Vorzugsweise weist das Gegenstück eine Ausgleichsvorrichtung auf. Durch die Ausgleichsvorrichtung werden Ungenauigkeiten der Positionierung des Blocklagerelements ausgeglichen. Dadurch kann ein Zusammenwirken des Gegenstücks mit der Energieübertragungsvorrichtung und/oder Datenübertragungsvorrichtung sichergestellt werden.

Vorzugsweise weist das Gegenstück eine Anpressvorrichtung auf. Die Anpressvorrichtung drückt zumindest einen Teil des Gegenstücks an die Energieübertragungsvorrichtung und/oder Datenübertragungsvorrichtung, wodurch ein Kontakt zwischen dem Gegenstück und der Energieübertragungsvorrichtung und/oder der Datenübertragungsvorrichtung hergestellt wird. Die Anpressvorrichtung hilft weiterhin Unregelmäßigkeiten in der Energieübertragungsvorrichtung und/oder der Datenübertragungsvorrichtung auszugleichen.

Die Energieübertragungsvorrichtung und/oder Datenübertragungsvorrichtung weist eine Schleifschiene und das Gegenstück einen Schleifkontakt auf. Sowohl die Schleifschiene, als auch der Schleifkontakt werden in großer Stückzahl hergestellt, wodurch die Elemente kostengünstig sind, was die Kosten der Gewächshausanordnung geringhält. Weiterhin werden im Rahmen eines Einlager- und Entnahmeprozess die Oberflächen der Schleifschiene und der Schleifkontakte gereinigt, abgeschliffen oder dergleichen, wodurch eine gute Übertragung von Energie oder Daten sichergestellt ist.

Vorzugsweise weist das Gegenstück wenigstens zwei hintereinander angeordnete Schleifkontakte auf. Durch diese Anordnung wirkt wenigstens ein Schleifkontakt, und damit das Gegenstück, mit der Versorgungseinrichtung und/oder Datenübertragungsvorrichtung zusammen. Dadurch können mögliche Lücken innerhalb der Versorgungseinrichtung und/oder Datenübertragungsvorrichtung überbrückt werden. Ein Zusammenwirken der Versorgungseinrichtung und/oder Datenübertragungsvorrichtung mit dem Gegenstück ist somit sichergestellt.

Vorzugsweise weist die Versorgungseinrichtung eine Flüssigkeit- und/oder Nährstoffversorgungsvorrichtung auf. Die Flüssigkeit- und/oder Nährstoffversorgungsvorrichtung kann Pflanzen, die in dem Blocklagerelement angeordnet sind, mit Flüssigkeit und/oder Nährstoffen versorgen. Dadurch finden die Pflanzen optimale Wachstumsbedingungen vor, wodurch das Pflanzenwachstum begünstigt werden kann.

Vorzugsweise weist die Flüssigkeits- und/oder Nährstoffversorgungsvorrichtung wenigstens ein Ventil und/oder wenigstens einen Vorratsbehälter und/oder wenigstens eine Pumpe und/oder wenigstens einen Zulauf und/oder wenigstens einen Ablauf und/oder wenigstens eine Aufbereitungsvorrichtung auf. Durch diese Anordnung können in dem Blocklagerelement angeordnete Pflanzen mit Flüssigkeit und/oder Nährstoffen versorgt werden. Die Pflanzen finden so optimale Wachstumsbedingungen vor, wodurch sich eine Zeit bis zur Ernte verkürzt. Weiterhin entfällt ein regelmäßiges Entnehmen des Blocklagerelements aus dem Blocklager, um die Pflanzen außerhalb des Blocklagers mit Flüssigkeit und/oder Nährstoffen zu versorgen. Das reduziert einen Pflegeaufwand und dadurch Kosten.

Die Erfindung wird im Folgenden anhand eines bevorzugten Ausführungsbeispiels in Verbindung mit der Zeichnung beschrieben. Hierin zeigen:
Fig. 1 ein Blocklager;
Fig. 2 einen Blocklagerelementaufnahmeraum;
Fig. 3 eine Detailaufnahme eines Gegenstücks und einer Stromschiene;
Fig. 4 eine schematische Darstellung einer untersten Blocklagerelementaufnahmeposition; und
Fig. 5 ein Eckführungsprofil.

Ein Blocklager beschreibt eine Lageranordnung mit wenigstens einem Blocklagerelementaufnahmeraum. In den Blocklagerelementaufnahmeraum können stapelbare Blocklagerelemente ein- und ausgelagert werden können. Dazu wird wenigstens ein Blocklagerelement durch einen Beschickungsraum in den Blocklagerelementaufnahmeraum ein- oder ausgelagert. Der Beschickungsraum kann in Schwerkraftrichtung oberhalb oder unterhalb des Blocklagerelementaufnahmeraums angeordnet sein, sodass eine Ein- oder Auslagerrichtung in Schwerkraftrichtung oder entgegengesetzt der Schwerkraftrichtung orientiert ist. Die Ein- und Auslagerrichtung wird durch die Anordnung des Beschickungsraums festgelegt. Ist der Beschickungsraum oberhalb des Blocklagerelementaufnahmeraums angeordnet, so ist die Einlagerrichtung in Schwerkraftrichtung und die Auslagerrichtung entgegen der Schwerkraftrichtung. Ist der Beschickungsraum in Schwerkraftrichtung unterhalb des Blocklagerelementaufnahmeraums angeordnet, so ist die Einlagerrichtung entgegen der Schwerkraftrichtung orientiert und die Auslagerrichtung in der Schwerkraftrichtung orientiert. Werden mehrere Blocklagerelemente in dem Blocklagerelementaufnahmeraum eingelagert entsteht ein Blocklagerelementstapel. Weitere Bezeichnungen für das Blocklager sind Stapellager o- oder Behälterstapellager. Im vorliegenden Ausführungsbeispiel ist der Blocklagerelementaufnahmeraum in Schwerkraftrichtung oberhalb des Beschickungsraums angeordnet.

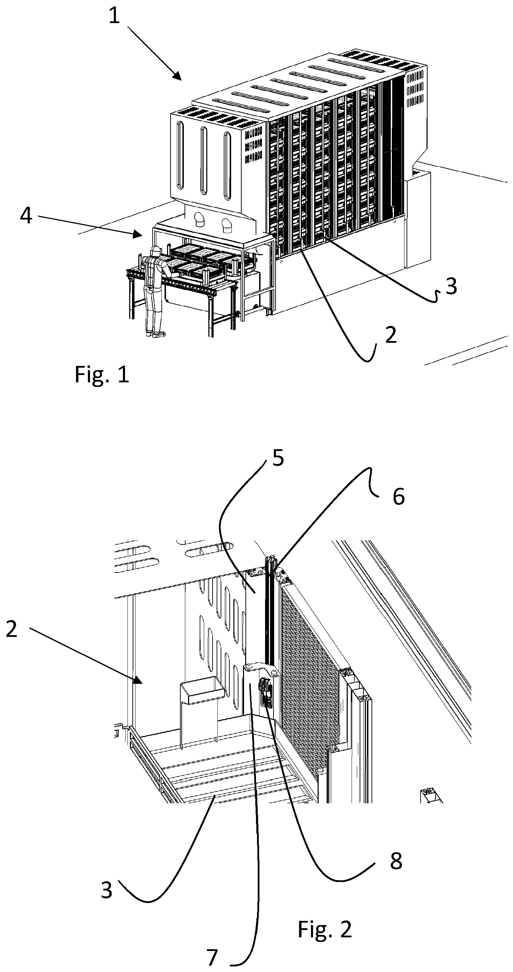

In Fig. 1 ist ein Blocklager 1 dargestellt. Das Blocklager 1 weist mehrere Blocklagerelementaufnahmeräume 2 auf. In den Blockelementaufnahmeräumen 2 können mehrere Blocklagerelemente 3 stapelbar und entnehmbar angeordnet sein. Die Blocklagerelemente 3 werden durch einen Einlager- und Entnahmebereich 4 in das Blocklager 1 überführt und von dort aus auch wieder entnommen. Der Einlager- und Entnahmebereich 4 ist in der vorliegenden Ausführungsform durch eine nicht dargestellte Schleuse mit dem Beschickungsraum verbunden sein. Die Schleuse ist wiederum mit einem nicht dargestellten Beschickungsraum verbunden, der unterhalb wenigstens eines Blocklagerelementaufnahmeraums angeordnet ist. In dem Beschickungsraum ist ein bewegbares Beschickungsfahrzeug angeordnet, das die Blocklagerelemente 3 von der Schleuse in einen Blockelementaufnahmeraum 2 überführt. Dazu holt das Beschickungsfahrzeug ein Blocklagerelement 3 von der Schleuse ab, indem das Beschickungsfahrzeug das Blocklagerelement von unten, in Schwerkraftrichtung, mit einer Hebevorrichtung anhebt, wodurch das Blocklagerelement 3 auf dem Beschickungsfahrzeug angeordnet ist. Anschließend verfährt das Beschickungsfahrzeug samt Blocklagerelement 3 zu einem Blocklagerelementaufnahmeraum 2, in den das Blocklagerelement 3 eingelagert werden soll. Dort angekommen, hebt das Beschickungsfahrzeug das Blocklagerelement entgegen der Scherkraftrichtung nach oben. Sollte bereits ein oder mehr Blocklagerelemente 3 in dem zu befüllenden Blocklagerelementaufnahmeraum 2 angeordnet sein, hebt das Beschickungsfahrzeug das einzulagernde Blocklagerelement 3 samt dem oben drüber angeordneten Blocklagerelement 3 an und formt somit einen Blocklagerelementstapel. Sobald der Blocklagerelementstapel durch das Beschickungsfahrzeug über eine gewisse Höhe gehoben wurde, verschieben sich nicht dargestellte Halteelement, die den Blocklagerelementstapel halten, sodass sich die Hebevorrichtung des Beschickungsfahrzeugs ohne das Blocklagerelement 3 wieder senken kann. Das Beschickungsfahrzeug ist nun frei und kann weitere Blocklagerelemente 3 ein- oder auslagern. Während eines Auslagerprozesses kann jeweils nur das unterstes Blocklagerelement 2 eines in einem Blocklagerelementaufnahmeraum 2 angeordneten Blocklagerelementstapels entnommen werden. Dazu positioniert sich das Beschickungsfahrzeug unterhalb des zu entnehmenden Blocklagerelementes 3 und hebt dieses oder den Blocklagerelementstapel an, sodass sich das Haltelement in eine Freigabeposition verschiebt. Anschließend senkt das Beschickungsfahrzeug den Blocklagerelementstapel. Sobald der Blocklagerelementstapel um eine gewisse Distanz gesenkt wurde verschieben sich die Halteelemente zurück in eine Halteposition und halten den verbleibenden Blocklagerelementstapel in dem Blocklagerelementaufnahmeraum 2. Das unterste Blocklagerelement 3 des Blocklagerelementstapels ist nun auf dem Beschickungsfahrzeug angeordnet, das das Blocklager 3 zu der Schleusenanordnung (Schleuse) überführt. Von dort aus kann das Blocklagerelement 3 weitertransportiert, gewartet, instandgesetzt, wiedereingelagert oder dergleichen werden.

In Fig. 2 ist ein Blocklagerelementaufnahmeraum 2 dargestellt. In dem Blocklagerelementaufnahmeraum 2 ist ein Blocklagerelement 3 angeordnet. Weiterhin weist der Blockelementaufnahmeraum 2 wenigstens ein Eckführungsprofil 5 mit einer integrierten Stromschiene 6 auf. Das Blocklagerelement 3 weist in seinen Ecken eine Stapelgeometrie 7 mit einem Gegenstück 8 auf. Dabei wirkt das Gegenstück 8 mit der Stromschiene 6 in einem eingelagerten Zustand des Blocklagerelementes 3 zusammen. Die Stapelgeometrie 7 ist in wenigstens einer Ecke des Blocklagerelementes 3 angeordnet und beabstandet einzelne Blocklagerelemente 2 in Schwerkraftrichtung zueinander. Weiterhin kann die Stapelgeometrie 7 eine geometrische Anordnung aufweisen, die eine Verschiebung gestapelter Blocklagerelemente 3 zueinander verhindert.

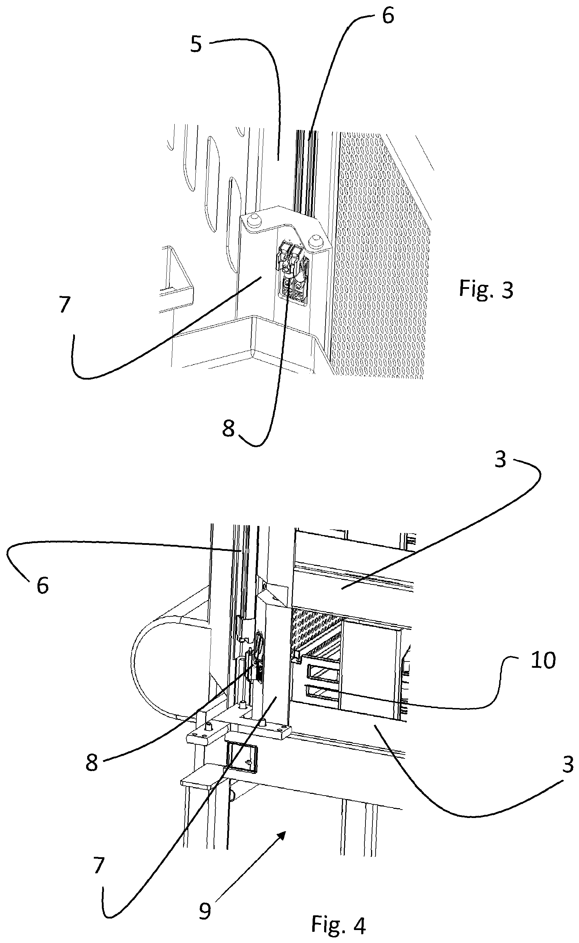

In Fig. 3 ist eine Detailaufnahme des Eckführungsprofils 5, der Stromschiene 6, der Stapelgeometrie 7 und des Gegenstücks 8 dargestellt. Das Gegenstück 8 kann dabei eine nicht dargestellte Ausgleichsvorrichtung und eine nicht dargestellte Anpressvorrichtung aufweisen. Weiterhin weist das Gegenstück 8 zwei nicht dargestellte hintereinander angeordnete Schleifkontakte auf, die in einem eingelagerten Zustand mit der Stromschiene 6 zusammenwirken. Die Stromschiene 6 und das Gegenstück 8 sind aneinander angepasst. So können sowohl die Stromschiene 6 als auch das Gegenstück verschiedene Phasen zur Stromübertragung aufweisen. Je nachdem wie viele Phasen zu übertragen sind, kann die Stromschiene 6 und das Gegenstück zweiphasig für einen Plus-Pol und einen Minus-Pol aufweisen, oder bei einer Drehstromübertragung auch drei Phasen.

In Fig. 4 ist schematisch dargestellt, wo die Stromschiene 6 in dem Blocklagerelementaufnahmeraum 2 angeordnet ist. Dabei ist zu erkennen, dass das Gegenstück 8 des unteren Blocklagerelements 3 nicht mit der Stromschiene 6 zusammenwirkt. Die Stromschiene 6 endet oberhalb in Schwerkraftrichtung der untersten Blocklagerelementaufnahmeposition. Unterhalb der untersten Blocklagerelementaufnahmeposition ist ein Beschickungsraum 9 angeordnet. Weiterhin kann in einem Blocklagerelement 3 ein oder mehrere Pflanzbehälter 10 angeordnet sein. In einem solchen Pflanzbehälter 10 können Pflanzen in sämtlichen Wachstumsstadien angeordnet sein.

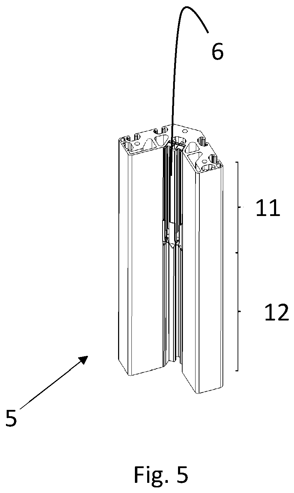

In Fig. 5 ist ein Eckführungsprofil 5 mit einer integrierten Stromschiene 6 dargestellt. Dabei ist deutlich zu erkennen, dass die Stromschiene nur in einem oberen Bereich 11 angeordnet ist. Der obere Bereich 11 ist dabei oberhalb der untersten Blocklagerelementaufnahmeposition angeordnet. Im unteren Bereich 12 der dem Bereich der untersten Blocklagerelementaufnahmeposition entspricht, ist keine Stromschiene angeordnet.

Im Folgenden wird ein beispielhafter Prozess beschrieben, bei dem ein Blocklagerelement 3 mit Pflanzen bestückt in das Blocklager eingelagert wird, und dort verweilt, bis die Pflanzen erntereif sind, um anschließend wieder ausgelagert zu werden.

Ein Blocklagerelement 3 wird in den Einlager- und Entnahmebereich 4 überführt. Von dem Einlager- und Entnahmebereich 4 wird das Blocklagerelement 3 durch die Schleuse in den Beschickungsraum 9 überführt. Ausgehend vom Beschickungsraum 9 wird das Blocklagerelement 3 von unten in den Blocklagerelementaufnahmeraum 2 überführt. Entsprechend werden weitere Blocklagerelemente 3 in dem Blocklagerelementaufnahmeraum 2 eingelagert. Es entsteht in dem Blocklagerelementaufnahmeraum 2 ein Blocklagerelementstapel.

Bei der Überführung des Blocklagerelements 3 von dem Beschickungsraum 9 in dem Blocklagerelementaufnahmeraum 2 wird das Gegenstück 8 in das Eckführungsprofil 5 eingeführt. Sobald das Blocklagerelement 3 von der untersten Blocklagerelementaufnahmeposition in eine weiter obenliegende Blocklagerelementaufnahmeposition überführt wird, greift das Gegenstück 8 in den oberen Bereich 11 der Stromschiene 6. Dadurch wirkt das Gegenstück 8 mit der Stromschiene 6 zusammen. Die Stromschiene 6 kann in einem Einführbereich an einem unteren Ende der Stromschiene 6 eine Einführanordnung aufweisen, die den Einführprozess des Gegenstücks 8 in die Stromschiene 6 vereinfacht. Weiterhin kann durch die Ausgleichsvorrichtung und die Anpressvorrichtung des Gegenstücks 8 der Einführprozess zusätzlich vereinfacht werden.

Sobald das Gegenstück 8 mit der Stromschiene 6 in Kontakt ist, kann beispielsweise eine an einer Unterseite des Blocklagerelements 3 angeordnete Leuchteinrichtung leuchten. Das Blocklagerelement 3, das in der untersten Blocklagerelementaufnahmeposition angeordnet ist, wirkt nicht mit der Energieübertragungsvorrichtung zusammen, sodass die Leuchteinrichtung an diesem Blocklagerelement nicht leuchten kann. Eine Unterbrechung der Energieversorgung des untersten Blocklagerelementes 3 entfällt, wodurch ein Steuer- und Regelungsaufwand reduziert wird.

Durch eine nicht dargestellte Versorgungseinrichtung, die Flüssigkeit und/oder Nährstoffe zu den Pflanzen bringen kann wird ein Eingreifen von menschlicher Seite während des Wachstumsprozesses der Pflanzen überflüssig. Eine solche Flüssigkeits- und/oder Nährstoffversorgungsvorrichtung kann weiterhin folgende Elemente aufweisen: wenigstens ein Ventil und/oder wenigstens einen Vorratsbehälter und/oder wenigstens eine Pumpe und/oder wenigstens einen Zulauf und/oder wenigstens einen Ablauf und/oder wenigstens eine Aufbereitungsvorrichtung. Durch diese Elemente lässt sich die Flüssigkeits- und/oder Nährstoffversorgungsvorrichtung an die Gewächshausanordnung anpassen. Auch kann die Flüssigkeit und/oder der Nährstoff durch die Aufbereitungsvorrichtung wieder benutzt werden.

Weiterhin kann die Gewächshausanordnung eine Klimatisierung aufweisen, die den Pflanzen optimale klimatische Bedingungen ermöglicht. Dadurch kann beispielsweise ein Wachstum der Pflanzen beschleunigt oder verlangsamt werden. Zu den klimatischen Bedingungen zählen beispielsweise Lufttemperatur, CO₂-Gehalt der Luft, Luftfeuchtigkeit oder dergleichen.

Die Blocklagerelemente 3 verbleiben in dem Blocklager 1, bis die Pflanzen erntereif oder bereit zum Umsetzen sind. Um Blocklagerelemente 3 aus dem Blocklager 1 auszulagern, wird jeweils das unterste Blocklagerelement 3 von einem Blocklagerelementstapel aus einem Blocklagerelementaufnahmeraum 2 in dem Beschickungsraum 9 überführt. Von dem Beschickungsraum 9 wird das Blocklagerelement 3 durch die Schleuse in den Einlager- und Entnahmebereich überführt. In dem Einlager- und Entnahmebereich können die erntereifen Pflanzen von dem Blocklagerelement 3 entnommen werden und das Blocklagerelement kann mit neuen Pflanzen oder Samen bestückt werden, bevor das Blocklagerelement 3 wieder eingelagert wird. Alternativ zur Wiedereinlagerung des Blocklagerelementes 3 kann das Blocklagerelement 3 gewartet oder gereinigt werden.

### Bezugszeichenliste

- 1: Blocklager
- 2: Blocklagerelementaufnahmeraum
- 3: Blocklagerelement
- 4: Einlager- und Entnahmebereich
- 5: Eckführungsprofil
- 6: Stromschiene
- 7: Stapelgeometrie
- 8: Gegenstück
- 9: Beschickungsraum
- 10: Pflanzbehälter
- 11: oberer Bereich
- 12: unterer Bereich

## Patentansprüche

1. Gewächshausanordnung, die ein Blocklager (1) mit Blocklagerelementaufnahmeräumen (2) aufweist, in denen wenigstens ein Stapel aus mehreren Blocklagerelementen (3) aufnehmbar ist,
wobei die Gewächshausanordnung wenigstens einen Behälteraufnahmeraum (2) aufweist, der wenigstens eine Versorgungseinrichtung und/oder wenigstens eine Datenübertragungsvorrichtung aufweist,
wobei die Versorgungseinrichtung und/oder Datenübertragungsvorrichtung entlang einer Einlager- und/oder Entnahmerichtung angeordnet ist,
wobei die Versorgungseinrichtung eine Energieübertragungsvorrichtung aufweist,
wobei wenigstens ein in dem Blocklagerelementaufnahmeraum (2) angeordnetes Blocklagerelement (3) wenigstens ein Gegenstück (8) zur Energieübertragungsvorrichtung und/oder Datenübertragungsvorrichtung aufweist,
und die Energieübertragungsvorrichtung und/oder Datenübertragungsvorrichtung eine Stromschiene (6) und das Gegenstück (8) einen Schleifkontakt aufweist.

2. Gewächshausanordnung nach Anspruch 1, **dadurch gekennzeichnet, dass** unterhalb des Blocklagerelementaufnahmeraum (2) ein Beschickungsraum angeordnet ist.

3. Gewächshausanordnung nach Anspruch 1 oder 2 **dadurch gekennzeichnet, dass** das Blocklagerelement (3) eine Leuchteinrichtung aufweist.

4. Gewächshausanordnung nach einem der Ansprüche 1 bis 3, **dadurch gekennzeichnet, dass** der Blocklagerelementaufnahmeraum (2) eine unterste Blocklagerelementaufnahmeposition und wenigstens eine weitere oberhalb angeordnete Blocklagerelementaufnahmeposition aufweist, wobei die Versorgungseinrichtung und/oder Datenübertragungsvorrichtung ausgehend von einer obersten Blocklagerelementaufnahmeposition oberhalb der untersten Blocklagerelementaufnahmeposition endet.

5. Gewächshausanordnung nach einem der Ansprüche 1 bis 4, **dadurch gekennzeichnet, dass** unterschiedliche Versorgungseinrichtungen und/oder Datenübertragungsvorrichtungen an verschiedenen Ecken des Blocklagerelementaufnahmeraums (2) angeordnet sind.

6. Gewächshausanordnung nach Anspruch 1, **dadurch gekennzeichnet, dass** das Gegenstück (8) eine Ausgleichsvorrichtung aufweist.

7. Gewächshausanordnung nach einem der Ansprüche 1 bis 6, **dadurch gekennzeichnet, dass** das Gegenstück (8) eine Anpressvorrichtung aufweist.

8. Gewächshausanordnung nach einem der Ansprüche 1 bis 7, **dadurch gekennzeichnet, dass** das Gegenstück (8) wenigstens zwei hintereinander angeordnete Schleifkontakte aufweist.

9. Gewächshausanordnung nach einem der Ansprüche 1 bis 5, **dadurch gekennzeichnet, dass** die Versorgungseinrichtung eine Flüssigkeit- und/oder Nährstoffversorgungsvorrichtung aufweist.

10. Gewächshausanordnung nach Anspruch 9, **dadurch gekennzeichnet, dass** die Flüssigkeits- und/oder Nährstoffversorgungsvorrichtung wenigstens ein Ventil und/oder wenigstens einen Vorratsbehälter und/oder wenigstens eine Pumpe und/oder wenigstens einen Zulauf und/oder wenigstens einen Ablauf und/oder wenigstens eine Aufbereitungsvorrichtung aufweist.

## Claims

1. Greenhouse arrangement comprising a block storage (1) with block storage element receiving spaces (2) in which at least one stack of several block storage elements (3) can be received,
wherein the greenhouse arrangement has at least one block storage element receiving space (2) which has at least one supply device and/or at least one data transmission device,
wherein the supply device and/or data transmission device is arranged along a storage and/or removal direction,
wherein the supply device has an energy transmission device,
wherein at least one block storage element (3) arranged in the block storage element receiving space (2) has at least one counterpart (8) to the and/or data transmission device, and
the energy transmission device and/or at least one data transmission device has a conductor rail (6) and the counterpart (8) has a sliding contact.

2. Greenhouse arrangement according to claim 1, **characterized in that** a feeding space is arranged below the block storage element receiving space (2).

3. Greenhouse arrangement according to claim 1 or 2, **characterized in that** the block storage element (3) has a lighting device.

4. Greenhouse arrangement according to one of claims 1 to 3, **characterized in that** the block storage element receiving space (2) has a lowest block storage element receiving position and at least one further block storage element receiving position arranged above it, wherein the supply device and/or data transmission device ends above the lowest block storage element receiving position starting from a highest block storage element receiving position.

5. Greenhouse arrangement according to one of claims 1 to 4, **characterized in that** different supply devices and/or data transmission devices are arranged at different corners of the block storage element receiving space (2).

6. Greenhouse arrangement according to claim 1, **characterized in that** the counterpart (8) has a compensating device.

7. Greenhouse arrangement according to one of claims 1 to 6, **characterized in that** the counterpart (8) has a pressing device.

8. Greenhouse arrangement according to one of claims 1 to 7, **characterized in that** the counterpart (8) has at least two sliding contacts arranged one behind the other.

9. Greenhouse arrangement according to one of claims 1 to 5, **characterized in that** the supply device has a liquid and/or nutrient supply device.

10. Greenhouse arrangement according to claim 9, **characterized in that** the liquid and/or nutrient supply device has at least one valve and/or at least one storage container and/or at least one pump and/or at least one inlet and/or at least one outlet and/or at least one treatment device.

## Revendications

1. Agencement de serre, qui comporte un système d' entreposage en blocs (1) avec des compartiments de réception d'éléments d'entreposage en blocs (2) dans lesquels peut être logée une pile de plusieurs éléments d'entreposage en blocs (3),
sachant que l'agencement de serre comporte au moins un compartiment de réception de conteneurs (2), qui comporte au moins un système d'alimentation et/ou au moins un dispositif de transmission de données,
sachant que le système d'alimentation et/ou le dispositif de transmission de données sont disposés le long d'une direction d'entreposage et/ou de prélèvement,
sachant que le système d'alimentation comporte un dispositif de transmission d'énergie,
sachant qu'au moins un élément d'entreposage en blocs (3) disposé dans le compartiment de réception d'éléments d'entreposage en blocs (2) comporte au moins une pièce correspondante (8) pour le dispositif de transmission d'énergie et/ou au dispositif de transmission de données,
et le dispositif de transmission d'énergie et/ou le dispositif de transmission de données comportent un rail de contact (6) et la pièce correspondante (8) un contact par frottement.

2. Agencement de serre selon la revendication 1, **caractérisé en ce qu'**un compartiment de chargement est disposé en dessous du compartiment de réception d'éléments d'entreposage en blocs (2).

3. Agencement de serre selon la revendication 1 ou 2, **caractérisé en ce que** l'élément d'entreposage en blocs (3) comporte un système d'éclairage.

4. Agencement de serre selon l'une quelconque des revendications 1 à 3, **caractérisé en ce que** le compartiment de réception d'éléments d'entreposage en blocs (2) comporte une position de réception d'éléments d'entreposage en blocs inférieure et au moins une autre position d'éléments d'entreposage en blocs disposée au-dessus, sachant que le système d'alimentation et/ou le dispositif de transmission de données se termine au-dessus de la position de réception d'éléments d'entreposage en blocs en partant d'une position de réception d'éléments d'entreposage en blocs supérieure.

5. Agencement de serre selon l'une quelconque des revendications 1 à 4, **caractérisé en ce que** systèmes d'alimentation et/ou des dispositifs de transmission de données différents sont disposés aux différents angles du compartiment de réception d'éléments d'entreposage en blocs (2).

6. Agencement de serre selon la revendication 1, **caractérisé en ce que** la pièce correspondante (8) comporte un dispositif de compensation.

7. Agencement de serre selon l'une quelconque des revendications 1 à 6, **caractérisé en ce que** la pièce correspondante (8) comporte un dispositif de pression.

8. Agencement de serre selon l'une quelconque des revendications 1 à 7, **caractérisé en ce que** la pièce correspondante (8) comporte au moins deux contacts par frottement disposés l'un derrière l'autre.

9. Agencement de serre selon l'une quelconque des revendications 1 à 5, **caractérisé en ce que** le système d'alimentation comporte un dispositif d'alimentation en liquide et/ou nutriments.

10. Agencement de serre selon la revendication 9, **caractérisé en ce que** le dispositif d'alimentation en liquide et/ou en nutriments comporte au moins une vanne et/ou au moins un réservoir de stockage et/ou au moins une pompe et/ou au moins une arrivée et/ou au moins une évacuation et/ou au moins un dispositif de préparation.
